# DEMANDE DE BREVET EUROPEEN

(11) **EP 2 575 059 A1**
(43) Date de publication de la demande: **03.04.2013**
(21) Numéro de dépôt: 12185907.8
(22) Date de dépôt: 25.09.2012
(51) Int. Cl.: G06F 17/30, G06F 3/01, G06F 17/24

(54) **Procédé de restitution d'une représentation d'un document Web annoté, programme d'ordinateur et dispositif électronique associés**

(30) Priorité: 27.09.2011 FR 1158621
(71) Demandeur: Myriad Group AG, 8001 Zürich (CH)
(72) Inventeur: Howarth, Roy, Stalybridge, Cheshire SK15 3GE (GB); Nurse, Ed, MANCHESTER, M20 2SL (GB)
(74) Mandataire: Blot, Philippe Robert Emile

(57) **Abrégé**

Ce procédé de restitution d'une représentation d'un document Web annoté (24), le document Web annoté (24) étant un document Web sur lequel au moins une annotation (23) a été ajoutée, le document Web annoté comprenant un élément Web supérieur (25A) comportant au moins une annotation (23) et au moins un élément Web inférieur (25B, 25C) disposé au-dessous de l'élément Web supérieur (25A), est mis en oeuvre par un dispositif électronique comprenant des moyens de visualisation, une application de navigation sur le réseau Internet et une application d'annotation.

Le procédé comporte l'affichage du document Web annoté (24).

L'étape d'affichage comporte :
- (i) la détection d'un événement tactile ou de souris associé à l'élément Web supérieur (25A),
- (ii) le masquage de l'élément Web supérieur (25A) suite à la détection dudit évènement,
- (iii) la détermination d'un élément Web cible (25C) correspondant à l'élément Web inférieur situé directement sous ledit événement, et
- (iv) l'envoi de l'événement à l'élément Web cible (25C).

## Description

La présente invention concerne un procédé de restitution d'une représentation d'un document Web annoté, étant un document Web sur lequel au moins une annotation a été ajoutée, le document Web annoté comprenant un élément Web supérieur comportant au moins une annotation et au moins un élément Web inférieur disposé au-dessous de l'élément Web supérieur, le procédé étant mis en oeuvre par un dispositif électronique comprenant des moyens de visualisation, une application de navigation sur le réseau Internet et une application d'annotation le procédé comportant l'étape suivante :
- l'affichage du document Web annoté comportant la ou chaque annotation ajoutée.

La présente invention concerne également un produit programme d'ordinateur comportant les instructions logicielles qui, lorsqu'elles sont mises en oeuvre par une unité de traitement intégrée à un dispositif électronique comportant des moyens de visualisation de données et une application de navigation sur le réseau Internet, met en oeuvre les étapes, incombant à l'application d'annotation, d'un tel procédé de restitution, relativement à un document Web.

La présente invention concerne également un dispositif électronique comprenant:
- une unité de traitement,
- des moyens de visualisation de données,
- une application de navigation sur le réseau Internet, et
- une application d'annotation propre à restituer et/ou ajouter au moins une annotation sur un document Web, l'application d'annotation comportant un module de lecture de la ou des annotations propre à restituer une représentation d'un document Web annoté, le document Web annoté étant le document Web sur lequel au moins une annotation a été ajoutée, le document Web annoté comprenant un élément Web supérieur comportant au moins une annotation et au moins un élément Web inférieur disposé au-dessous de l'élément Web supérieur.

Une annotation est un élément graphique associé à un document et comprend du contenu non-natif du document renseigné par un utilisateur. De telles annotations permettent ainsi aux utilisateurs d'échanger des informations, des suggestions, des impressions, etc. relatives à un document Web via le document Web lui-même, plutôt que via un système de messagerie par exemple.

Ces annotations prennent la forme d'un dessin effectué à main levée, d'une note, d'un lien ou d'une image pointant vers un élément du document Web auquel elle se réfère. L'annotation est par exemple en forme d'une ellipse dessinée par l'utilisateur autour d'un lien hypertexte sélectionnable, afin de mettre le lien en évidence.

L'annotation du document Web comprend l'affichage, par l'application de navigation, d'une barre d'outils adaptés à la création et au positionnement d'annotations sur le document traité par l'application de navigation et visualisé. Les annotations ajoutées, ainsi que la barre d'outils, sont superposées à la représentation du document Web générée par l'application de navigation.

On connaît un procédé de restitution et un dispositif électronique du type précité. Un tel procédé de restitution permet à un utilisateur, à l'aide d'un tel dispositif électronique de restitution, de visualiser les annotations ajoutées, par lui-même ou par un autre utilisateur, sur ce document Web à l'aide du dispositif électronique d'annotation, tel qu'un ordinateur ou un téléphone portable. Les annotations restituées sont superposées à la représentation du document Web générée par l'application de navigation.

Toutefois, l'utilisation d'un tel dispositif électronique mettant en oeuvre un tel procédé de restitution ne permet pas de sélectionner un lien hypertexte autour duquel une annotation a été ajoutée.

Le but de l'invention est de proposer un procédé de restitution permettant, via la mise en oeuvre du dispositif électronique associé, de sélectionner un lien hypertexte autour duquel une annotation a été ajoutée, afin de faciliter l'utilisation du dispositif électronique.

A cet effet, l'invention a pour objet un procédé de restitution du type précité, **caractérisé en ce que** l'étape d'affichage comporte :
- (i) la détection d'un événement tactile ou de souris associé à l'élément Web supérieur,
- (ii) le masquage de l'élément Web supérieur suite à la détection dudit évènement,
- (iii) la détermination d'un élément Web cible correspondant à l'élément Web inférieur situé directement sous ledit événement, et
- (iv) l'envoi de l'événement à l'élément Web cible.

Suivant d'autres aspects avantageux de l'invention, le procédé de restitution comprend une ou plusieurs des caractéristiques suivantes, prises isolément ou suivant toutes les combinaisons techniquement possibles :
- la détection de l'évènement comporte le déclenchement de la capture d'événement(s) tactile ou de souris associé(s) à l'élément Web supérieur,
- l'envoi de l'événement comporte la création d'une réplique de l'événement, puis l'envoi de la réplique crée à l'élément Web cible,
- l'étape d'affichage comporte en outre après l'étape (iii) : l'affichage de l'élément Web supérieur précédemment masqué,
- le masquage de l'élément Web supérieur comporte le positionnement à l'état caché d'un attribut CSS de visibilité correspondant à l'élément Web supérieur,
- l'affichage de l'élément Web supérieur précédemment masqué comporte le positionnement à l'état visible de l'attribut CSS de visibilité correspondant à l'élément Web supérieur,
- le document Web est un document HTML, et l'élément Web est un élément HTML, et
- l'élément Web supérieur est un élément HTML propre à effectuer un rendu dynamique d'une image à l'aide d'un script.

L'invention a également pour objet un produit programme d'ordinateur comportant les instructions logicielles qui, lorsqu'elles sont mises en oeuvre par une unité de traitement intégrée à un dispositif électronique comportant des moyens de visualisation de données et une application de navigation sur le réseau Internet, met en oeuvre les étapes, incombant à l'application d'annotation, du procédé de restitution tel que défini ci-dessus, relativement à un document Web.

L'invention a également pour objet un dispositif électronique du type précité, **caractérisé en ce que** le module de lecture comprend des moyens de détection d'un événement tactile ou de souris associé à l'élément Web supérieur, des moyens de masquage de l'élément Web supérieur suite à la détection dudit évènement, des moyens de détermination d'un élément Web cible correspondant à l'élément Web inférieur situé directement sous ledit événement, et des moyens d'envoi de l'événement à l'élément Web cible.

Suivant un autre aspect avantageux de l'invention, le dispositif électronique comprend la caractéristique suivante :
- le dispositif comporte des moyens d'injection dans le document de ladite application d'annotation pour étendre le document, et l'application de navigation comprend un module de gestion de l'interface graphique d'accès au réseau Internet et un module de gestion de rendu de document définissant un contexte d'exécution du module de gestion de rendu, lequel contexte comprend les données source et traitées du module de gestion de rendu, dans lequel l'application d'annotation est propre à être exécutée depuis le document étendu seulement dans le contexte d'exécution du module de gestion de rendu sur les données source et traitées du module de gestion de rendu et en utilisant les mêmes fonctions que le module de gestion de rendu, et dans lequel le document traité par l'application de navigation comprend des éléments graphiques, l'application d'annotation étant adaptée pour ancrer une annotation à un point d'un élément graphique du document indépendamment des coordonnées de l'élément graphique dans le document.

Ces caractéristiques et avantages de l'invention apparaitront à la lecture de la description qui va suivre, donné uniquement à titre d'exemple, et faite en référence aux dessins annexés, sur lesquels :
- la figure 1 est une représentation schématique d'un système global comprenant un dispositif électronique adapté pour la mise en oeuvre du procédé selon l'invention,
- la figure 2 est une représentation schématique d'une représentation source d'un document Web selon un premier aspect de l'invention,
- la figure 3 est une représentation schématique d'une représentation cible du même document que la figure 2,
- la figure 4 est un organigramme d'un procédé global d'annotation d'un document Web et de restitution du document Web annoté, et
- la figure 5 est un organigramme d'un procédé selon l'invention.

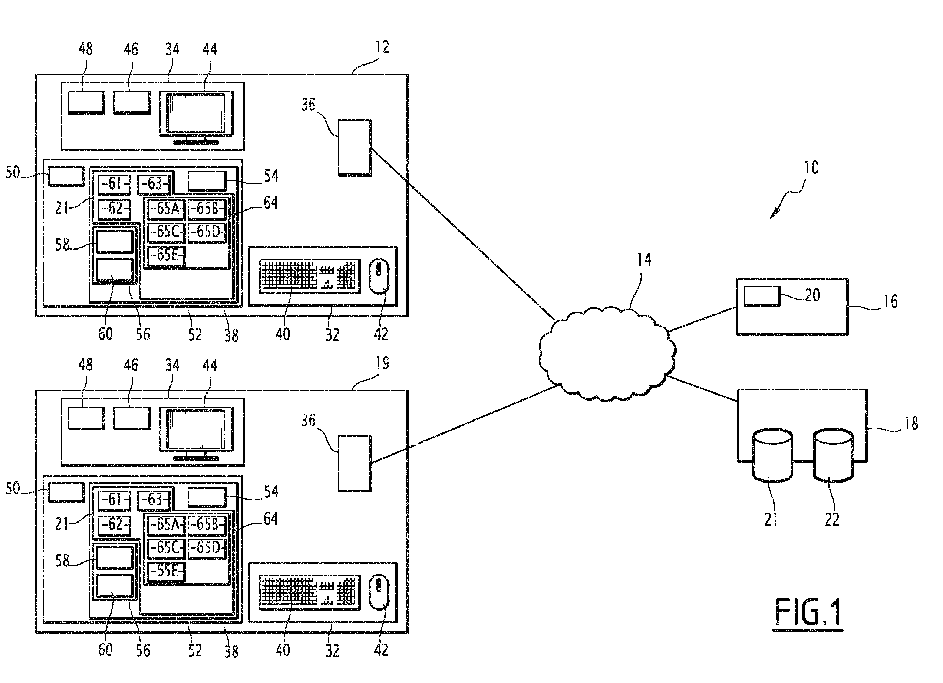

En référence à la figure 1, le système global 10 comprend un dispositif électronique 12 adapté pour interagir avec le réseau Internet 14 afin d'établir une communication avec au moins un serveur Web 16, un serveur 18 de gestion d'annotation, et un autre dispositif électronique 19.

De manière connue, le serveur Web 16 est adapté pour stocker des documents Web 20. Le serveur Web 16 est également adapté pour traiter une requête qu'il reçoit en provenance du dispositif électronique 12, 19. De façon classique, le traitement de la requête par le serveur 16 a pour effet l'envoi par celui-ci d'un document qu'il contient à destination du dispositif électronique dont provient la requête.

Le serveur de gestion d'annotation 18 est propre à stocker une application 21 d'annotation du document Web et des données d'annotation 22 du document Web, les données d'annotation 22 comportant des annotations 23 ajoutées sur le document Web 20 correspondant.

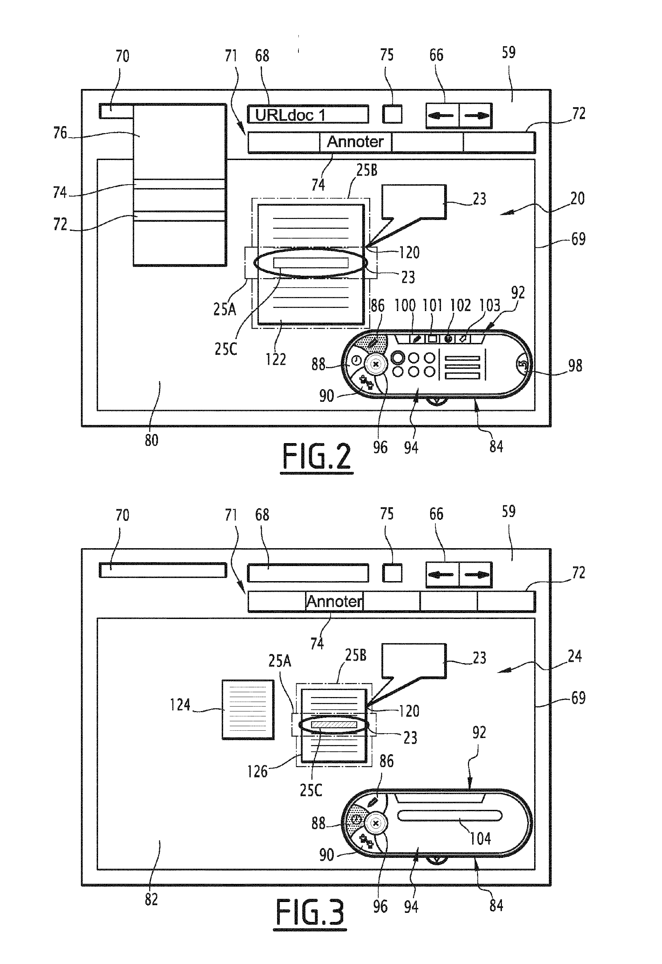

Un document Web annoté 24, propre à être restituer par le dispositif électronique 12, 19, est un document Web 20 sur lequel des annotations 23 ont été ajoutées, comme représenté sur la figure 3. Le document Web annoté 24 comprend un élément Web supérieur 25A comportant une annotation et au moins un élément Web inférieur 25B, 25C disposé au-dessous de l'élément Web supérieur 25A, le ou chaque élément Web inférieur 25B, 25C formant le document Web 20.

Le document Web 20 et le document Web annoté 24 sont, par exemple, des documents HTML (de l'anglais *HyperText Markup Language*), et le ou chaque élément Web 25A, 25B est un élément HTML.

Le dispositif électronique 12 est formé par exemple d'un ordinateur personnel, d'un téléphone portable ou d'une tablette à écran tactile. Le dispositif électronique 12 comprend des moyens 32 de saisie d'informations générées par un utilisateur, des moyens 34 de visualisation, des moyens 36 de télécommunication, et une unité centrale 38 de traitement adaptée pour exécuter des applications nécessaires au fonctionnement du dispositif électronique 12.

L'autre dispositif électronique 19 est analogue au dispositif électronique 12, et comprend les moyens de saisie 32, les moyens de visualisation 34, les moyens de télécommunication 36, et l'unité centrale 38.

Les moyens de visualisation 34 comprennent de façon connue un écran 44 et des moyens de traitement de l'information graphique, par exemple un processeur graphique 46 et une mémoire graphique 48 associée.

De façon connue, les moyens de saisie 32 comprennent un clavier 40 à partir duquel l'utilisateur peut instruire l'exécution de logiciels, de fonctionnalités de ces logiciels, ajouter du texte à un document, etc. Les moyens 32 de saisie comprennent aussi des moyens d'interaction avec une information affichée sur les moyens de visualisation 34, comme par exemple une souris 42 maniée par un utilisateur. Dans le cas considéré, la souris 42 comporte un bouton actionnable par une pression de l'utilisateur sur le bouton (un clic), le bouton pouvant alors être relâché ou maintenu appuyé par l'utilisateur.

Le processeur graphique 46 est adapté pour traiter l'information graphique stockée dans la mémoire graphique 48 et réaliser l'affichage sur l'écran 44 de cette information ou d'une représentation de celle-ci.

De façon avantageuse, les moyens de saisie 32 et les moyens de visualisation 34 peuvent présenter une forme commune, dans le cas d'un écran tactile par exemple.

Les moyens de télécommunication 36 comprennent une interface réseau permettant au dispositif électronique 12 de communiquer avec d'autres dispositifs connectés au réseau 14, par exemple le serveur Web 16, le serveur de gestion d'annotation 18 ou le dispositif électronique 19.

L'unité centrale 38 de traitement comprend un processeur 50 et une ou plusieurs mémoires 52.

Le processeur 50 est adapté pour exécuter des applications contenues en mémoire 52, notamment un système d'exploitation permettant le fonctionnement classique d'un dispositif électronique.

La mémoire 52 comprend différentes zones de mémoire, allouées statiquement ou dynamiquement, qui contiennent des applications destinées à être exécutées par le dispositif informatique 12.

La mémoire 52 est apte à stocker l'application d'annotation 21, une application 54 d'envoi de requête et une application de navigation 56.

L'application 54 d'envoi de requête a pour fonction d'instruire au dispositif électronique 12 l'envoi d'une requête à destination d'un dispositif distant via ses moyens de communication 36.

Lorsque l'application 54 d'envoi de requête est exécutée par le dispositif 12, une connexion au réseau est effectuée via un protocole de communication, par exemple le protocole HTTP (de l'anglais *HyperText Transfert Protocol*)*,* et une requête, par exemple une requête HTTP, est envoyée à travers le réseau 14 à un dispositif distant connecté au réseau 14.

De manière connue, lorsque le dispositif distant est un serveur et que la requête est une requête HTTP contenant l'adresse dite URL (Universal Ressource Locator) d'une ressource stockée sur le dispositif distant, par exemple un document Web 20, visible sur la figure 2, le serveur retourne la ressource demandée au dispositif électronique 12.

L'application de navigation 56 a pour fonction de permettre à l'utilisateur d'accéder à un contenu, par exemple le document Web 20, de le visualiser sur les moyens de visualisation 34 et d'interagir avec ce contenu, notamment via une interface graphique 59 que comprend l'application 56.

De manière connue, l'application de navigation 56 comprend au moins un module 58 de gestion d'une interface graphique 59 d'accès à un réseau et un module 60 de gestion de rendu.

Ces modules correspondent à des sous-ensembles logiciels de l'application de navigation 56 qui implémentent les fonctions qui les composent.

Le module 58 de gestion d'interface a pour fonction de piloter des éléments de l'interface graphique 59 de l'application de navigation 56 et d'assurer la connexion au réseau pour requérir et recevoir une page Web notamment.

L'application d'annotation 21 comporte un module d'annotation 61 propre à ajouter des annotations sur le document Web 20, un module 62 d'archivage des annotations ajoutées sur le document Web 20 à différentes dates d'annotation par au moins un utilisateur, et un module 63 d'échange des annotations ajoutées avec d'autres utilisateurs, comme représenté sur la figure 1 lorsque l'application d'annotation 21 est stockée dans la mémoire 52 du dispositif électronique.

Selon un premier aspect de l'invention, l'application d'annotation 21 comporte en outre un module 64 de lecture des annotations 23 archivées ou ajoutées par l'utilisateur lui-même. Autrement dit, le module de lecture 64 est propre à afficher le document Web annoté 24, c'est-à-dire à restituer les annotations 23 sur le document Web 20.

Le module d'annotation 61 permet à l'utilisateur de sélectionner un élément d'annotation (par exemple, une boîte de texte, une image, un dessin à main levée), d'en modifier certains attributs (par exemple la couleur ou la taille) pour obtenir une annotation personnalisée, puis de positionner l'annotation sur le document Web 20.

Le module d'archivage 62 est propre à générer les données d'annotation 22 associées audit document Web 20, les données d'annotation 22 comportant les annotations ajoutées sur ledit document Web 20.

Le module d'archivage 62 est propre à transmettre via les moyens de communication 36 les données d'annotation 22 générées à destination du serveur de gestion d'annotation 18 en vue de leur archivage. Le module d'échange 63 est propre à transmettre via les moyens de communication 36 à destination d'un autre utilisateur une adresse URL associée au document Web annoté. L'adresse URL associée au document Web annoté est transmise sous forme d'un lien hypertexte dans un courrier électronique, également appelé courriel (de l'anglais *e-mail*), ou encore sous forme d'un lien hypertexte dans un message sur un réseau social sur Internet, tel que Facebook© ou Twitter©.

Le module de lecture 64 comprend des moyens 65A de détection d'un événement tactile ou de souris associé à l'élément Web supérieur 25A, des moyens 65B de masquage de l'élément Web supérieur 25A suite à la détection dudit événement.

Le module de lecture 64 comprend des moyens 65C de détermination d'un élément Web cible 25C correspondant à l'élément Web inférieur situé directement sous ledit événement, et des moyens 65D d'envoi de l'événement à l'élément Web cible 25C.

En complément, le module de lecture 64 comprend des moyens 65E d'affichage de l'élément Web supérieur 25A précédemment masqué.

L'ensemble des événements tactiles comporte un événement *touchstart* de contact du doigt avec l'écran tactile, un événement *touchend* de retrait du doigt de l'écran tactile, un événement *touchmove* de déplacement du doigt à la surface de l'écran tactile, un événement *touchenter* de placement du doigt au contact d'une zone activable définie par un élément DOM, un événement *touchleave* de sortie du doigt d'une zone activable définie par un élément DOM, et un événement *touchcancel* d'annulation.

L'ensemble des événements de souris comporte un événement *onclick* de simple clic, un événement *ondblclick* de double clic, un événement *onmousedown* d'enfoncement du bouton de la souris, sans nécessairement le relâcher, un événement *onmousemove* de déplacement du curseur de la souris, un événement *onmouseout* de sortie du curseur de la souris de l'élément Web correspondant, un événement *onmouseover* de positionnement du curseur de la souris sur l'élément Web correspondant, et un événement *onmouseup* de relâchement du bouton de la souris. Les évènements de souris sont des évènements DOM (de l'anglais *Document Object Model*) recommandés par le W3C (de l'anglais *World Wide Web Consortium*). Les évènements de souris sont, par exemple, des évènements HTML.

Les moyens de détection 65A sont propres à déclencher la capture d'événement(s) tactile ou de souris associé(s) à l'élément Web supérieur.

Les moyens de masquage 65B sont propres à positionner à l'état caché un attribut CSS (de l'anglais *Cascading Style Sheet*) de visibilité (de l'anglais *visibility*) correspondant à l'élément Web supérieur 25A.

La valeur par défaut, ou état par défaut, de l'attribut CSS de visibilité est 'visible' (de l'anglais *visible*), valeur pour laquelle l'élément Web associé à l'attribut CSS de visibilité est visible. Lorsque la valeur de l'attribut CSS de visibilité est positionnée à 'caché' (de l'anglais *hidden*), l'élément Web associé à l'attribut CSS de visibilité est masqué.

Les moyens de détermination 65C sont propres à déterminer l'élément Web cible 25C correspondant à l'élément Web inférieur situé directement sous ledit événement lorsque l'élément Web supérieur est masqué.

Les moyens d'envoi 65D sont propres à créer une réplique de l'événement, puis à envoyer la réplique crée à l'élément Web cible 25C. L'élément Web cible 25C est, par exemple, un lien hypertexte vers un autre document Web, et l'envoi de l'événement tactile ou de souris engendrera alors la requête en vue de l'affichage de l'autre document Web.

Les moyens d'affichage de l'élément Web supérieur précédemment masqué 65E sont propres à positionner à l'état visible l'attribut CSS de visibilité correspondant à l'élément Web supérieur.

L'élément Web supérieur 25A dépend du type de l'annotation 23 choisie par l'utilisateur. L'élément Web supérieur 25A est, par exemple, un élément HTML propre à effectuer un rendu dynamique d'une image à l'aide d'un script, lorsque l'annotation 23 est un dessin à main levée. Dans l'exemple de réalisation des figures 2 et 3, l'élément Web supérieur est l'élément *canvas* prévu par la norme HTML5.

En variante, l'élément Web supérieur 25A est un élément image, tel qu'un élément HTML image, également appelé élément IMG et repéré par l'attribut <img> connu en soi.

De façon connue, et en référence aux figures 2 et 3, les éléments de l'interface graphique 59 comprennent des boutons 66 de défilement entre les documents visualisés, une barre 68 de navigation, un cadre d'affichage 69 à l'intérieur duquel le document Web 20 est susceptible d'être affiché, une barre de menu déroulant 70 et une barre de marque-pages 71. L'utilisateur interagit alors avec ces éléments via les moyens de saisie 32.

Le module de gestion de rendu 60 a pour fonction de piloter l'ensemble des fonctionnalités associées au traitement des documents et d'en réaliser l'affichage sur les moyens de visualisation 34.

De manière connue, ce module de gestion 60 a pour fonction de générer une représentation du document, d'ajouter des éléments graphiques au document visualisé, d'exécuter le contenu multimédia du document, d'exécuter les « scripts » s'y trouvant et d'interagir avec les actions de l'utilisateur.

Lors du fonctionnement de l'application 56 de navigation, la réception d'éléments associés à une page Web que l'utilisateur souhaite consulter déclenche leur traitement par l'unité centrale 38 et leur envoi vers le module 60 de gestion de rendu. Celui-ci réalise alors la construction d'une représentation du document qui est ensuite sauvegardée dans la mémoire 46 des moyens 34 de visualisation, puis affichée sur l'écran 44.

Ce module 60 de gestion de rendu correspond au coeur de l'application de navigation 56 et repose sur l'utilisation de langages et de technologies standards recommandés par le W3C. Ces technologies comprennent par exemple le HTML, le CSS, et le Javascript, qui est un langage de manipulation d'objets fournis par une application, telle l'application d'annotation 21.

Ainsi une application pilotée par le module de gestion d'une application de navigation est adaptable à différentes applications de navigation.

De manière connue, le document Web 20 est construit à partir d'un langage de balisage, par exemple le HTML. D'autres langages et technologies couramment utilisées pour la construction d'un tel document sont le XML (de l'anglais *Extensible Markup Language*), le JavaScript, le CSS, etc...

Le langage de balisage permet à un développeur, un créateur de contenu, etc. de construire un document en y ajoutant des éléments balisés sémantiquement. Les balises sont ensuite traitées par le module de gestion de rendu 60 qui génère une représentation logique du document à partir de celles-ci avec laquelle les modules de l'application interagissent.

Dans un dispositif selon l'invention, le module 60 de gestion de rendu implémente les représentations logiques de type Document Object Model (DOM). Une représentation DOM d'un document définit la structure logique du document sous forme arborescente. Chaque noeud de l'arborescence correspond à un élément du document structuré, par exemple une image, un bloc de texte, un lien, etc.

Chaque noeud comprend des noeuds dits « fils » situés à un rang en-dessous dans l'arborescence. Chacun des fils de ce noeud correspond à une portion logique du document de granularité supérieure à ce noeud, c'est-à-dire de plus grand détail.

Ainsi, le noeud de premier rang de la représentation DOM correspond au document en entier, ses fils correspondent aux portions logiques principales du document, leur fils à des portions logiques de ces portions logiques principales, etc.

Dans ce qui suit, les données « traitées » par le module de gestion de rendu 60 correspondent à la représentation DOM du document à partir de laquelle est créée une représentation affichée sur les moyens de visualisation 44. Les données dites « sources » du module 60 correspondent aux données -par exemple le code HTML- du document nécessaires au module 60 pour en réaliser la représentation DOM.

L'application 56 de navigation comprend en outre plusieurs fonctionnalités illustrées sur les figures 2 et 3.

De manière connue, l'une de ces fonctionnalités permet à l'utilisateur de saisir dans le navigateur via une barre de navigation 68 l'adresse URL d'une ressource à laquelle il souhaite accéder.

L'application 56 de navigation est également adaptée pour permettre à l'utilisateur de générer des marque-pages 72, également appelés signets (de l'anglais *bookmark*), lui permettant d'accéder rapidement à une ressource donnée.

De manière classique, ces marque-pages 72 sont remplaçables par des marque-pages « scriptés » 74, également appelés signets « scriptés » (de l'anglais *bookmarklet*).

Cette fonctionnalité de génération de marque-pages est pilotée par le module de gestion d'interface 58, et est, par exemple, implémentée à l'aide d'un bouton de raccourci dédié 75 sous la forme d'onglets dans la barre de marque-pages 71 et/ou dans un menu déroulant 76 accessible via la barre de menu déroulant 70.

De manière connue, lorsque l'utilisateur souhaite créer un marque-page 72 associé à une ressource spécifique, il « clique » via la souris 42 sur le bouton 75 de raccourci. Le module 58 de gestion d'interface ordonne à l'unité centrale 38 de traitement l'exécution d'une commande qui a pour résultat la création d'un marque-page 72 accessible ultérieurement via un onglet dans la barre de marque-pages 71 et/ou via un onglet dans le menu déroulant 76.

Lorsque l'utilisateur souhaite accéder à une ressource à laquelle est associé un marque-page 72, il clique via la souris sur l'onglet correspondant dans le menu déroulant 76. Le navigateur exécute alors une commande ayant pour résultat l'envoi d'une requête par le dispositif informatique 12 à un serveur distant sur lequel est stockée la ressource correspondant au marque-page 72.

La fonction d'un marque-page scripté 74 est de permettre, outre l'accès à une ressource distante, l'exécution d'un script, par exemple un Javascript, qui est contenu dans le marque-page scripté. Ainsi, une fonctionnalité plus riche que le simple accès à la ressource peut être associée à un marque-page 72 via un marque-page scripté 74 qui le remplace dans le menu déroulant 76. De manière connue, ces marque-pages scriptés 74 permettent la modification du document visualisé, la consultation d'un moteur de recherche, l'exécution d'une requête particulière, etc.

Dans le mode de réalisation considéré, l'application d'annotation 21 est propre à être mise en oeuvre par le dispositif électronique 12 relativement à un document Web après avoir été, par exemple, préalablement « injectée » dans le document. L'injection est réalisée de la manière suivante : un marque-page scripté 74 spécifique désigné ci-dessous par l'appellation « marque-page scripté Annoter » créé un élément <script> dans le document par le biais de la fonction Javascript standard document.createElement('script'), puis assigne la source de ce script à un fichier Javascript situé sur le serveur de gestion d'annotation 18 en modifiant l'attribut src de l'élément <script> préalablement créé. Enfin, l'élément <script> est ajouté dans le document par le biais de la fonction JavaScript standard document.body.appendChild(S), où S est l'élément <script> préalablement créé, ce qui a pour effet de déclencher l'injection, puis l'exécution du fichier Javascript pointé par S.

En informatique, on désigne par injection d'une application à un document, l'ajout du code et des fonctions qui constituent l'application, au document.

En pratique, l'application 21 implémente du code comprenant des fonctions et des scripts en langages HTML, CSS et Javascript, comme on le verra par la suite.

Lors de l'injection de l'application 21 dans le document, ces fonctions et ces scripts sont ajoutés à ceux qui composent le document lui-même.

L'application 21 réalise ainsi une extension du document.

Cette application 21 d'annotation a pour fonction de permettre à un utilisateur d'ajouter et de visualiser des annotations 23 sur un document Web 20. Ces annotations 23 peuvent avoir été générées par lui ou par un autre utilisateur sur une autre représentation du document. Cette représentation peut par exemple avoir elle-même été générée depuis un autre dispositif informatique 19.

Plus particulièrement, l'application d'annotation 21 est adaptée pour restituer une annotation ajoutée à une représentation 80 (c'est-à-dire au rendu du document généré par le module 60 de gestion de rendu à partir de la représentation DOM du document avec laquelle le module 60 de gestion de rendu interagit) dite « source » d'un document Web 20 sur une représentation 82 dite « cible » du même document. Deux représentations d'un même document peuvent varier sensiblement l'une de l'autre du fait des différences entre les moyens de visualisation utilisés, les tailles des fenêtres de visualisation, des tailles des polices utilisées, des niveaux de zoom utilisés, etc.

L'application d'annotation 21 est également adaptée pour communiquer avec le serveur de gestion d'annotation 18 via les moyens 36 de communication de l'ordinateur 12 afin d'obtenir les informations dont elle a besoin pour fonctionner, comme on le verra par la suite.

L'application d'annotation 21 comprend une fonctionnalité de création d'annotation sur une représentation d'un document Web 20 et une fonctionnalité de restitution d'une annotation associée à un document.

La fonctionnalité de création d'annotation permet à un utilisateur de créer une annotation 23 personnalisée, par exemple une image, un bloc de texte, du texte libre, etc. et de l'associer à un élément graphique que comprend le document.

A cet effet, l'application d'annotation 21 permet à l'utilisateur de sélectionner le type de l'annotation 23 qu'il souhaite ajouter, le contenu de l'annotation, un élément dit « source » de la représentation auquel l'annotation est associée, la position de l'annotation relativement à cet élément source, etc.

Ces fonctions sont implémentées par l'intermédiaire d'une barre d'outils 84 générée sur les moyens de visualisation 34 par le module de gestion de rendu 60 lors de l'exécution de l'application d'annotation 21 sur le dispositif électronique 12 avec laquelle l'utilisateur peut interagir.

La barre d'outils 84 forme une interface homme-machine entre l'utilisateur et les différents modules de l'application d'annotation 21 afin de permettre à l'utilisateur d'ajouter une annotation sur le document Web 20, via la sélection d'un élément d'annotation (par exemple, une boîte de texte, une image, un dessin à main levée), la modification de certains attributs (par exemple la couleur ou la taille) pour obtenir une annotation personnalisée, puis le positionnement de l'élément sur le document Web 20, ou d'échanger des annotations ajoutées avec d'autres utilisateurs, ou encore d'afficher des annotations.

La barre d'outils 84 comporte présente trois onglets de mode 86, 88, 90, correspondant respectivement à trois modes d'interaction distincts entre l'utilisateur et l'application d'annotation 21, à savoir un premier onglet de mode 86 symbolisé par un crayon et permettant de sélectionner un mode d'ajout d'annotation, visible sur la figure 2, un deuxième onglet de mode 88 symbolisé par une horloge et permettant de sélectionner un mode d'affichage des annotations, visible sur la figure 3, et un troisième onglet de mode 90 symbolisé par deux personnes reliées par une flèche et permettant de sélectionner un mode, non représenté, d'échange des annotations ajoutées avec d'autres utilisateurs.

La barre d'outils 84 comporte une barre supérieure 92 et une zone centrale 94 dans lesquelles les éléments affichés varient en fonction du mode d'interaction sélectionné par l'utilisateur, ainsi qu'un bouton 96 de fermeture de l'application d'annotation, symbolisé par une croix entourée d'un cercle.

Les trois onglets de mode 86, 88, 90, la barre supérieure 92, la zone centrale 94 et le bouton de fermeture 96 sont des zones sélectionnables prédéfinies, également appelées zones actives prédéfinies. Autrement dit, un clic à l'aide de la souris 42, ou un toucher tactile dans le cas d'un écran tactile, sur la zone sélectionnable correspondante engendre une action associée de l'application correspondante, telle que l'application d'annotation 21 dans le cas des zones sélectionnables de la barre d'outils 84.

Dans le mode d'annotation, visible sur la figure 2, la barre d'outils 84 comporte un onglet 98 d'annulation de la dernière saisie effectuée, et quatre onglets supérieurs respectivement 100, 101, 102, 103 agencés dans la barre supérieure 92 et associés à des modes distincts de saisie d'annotation, respectivement de saisie libre de texte à l'aide du curseur déplaçable grâce à la souris 42. Chacun de ces modes de saisie est sélectionnable par un clic sur la zone associée en positionnant le curseur sur la zone à l'aide de la souris 42 et en cliquant sur le bouton de la souris une fois le curseur localisé sur la zone. La sélection d'une zone parmi les zones 100, 101, 102, 103 a pour conséquence l'affichage d'une barre d'outils 84 spécifique à la zone sélectionnée.

Dans le mode d'affichage des annotations, visible sur la figure 3, la barre d'outils 84 comporte une zone 104 d'informations relatives au document Web annoté en cours d'affichage.

Dans le mode de réalisation considéré, la barre d'outils 84 est propre à conserver sa position par rapport au cadre d'affichage 69 lors du défilement horizontal et/ou vertical du document Web 20 à l'intérieur du carde d'affichage 69, tout en étant déplaçable par rapport au cadre d'affichage 69 sur action spécifique de l'utilisateur. Autrement dit, la barre d'outils 84 reste dans sa position initiale sur les moyens de visualisation 34 lorsque l'utilisateur fait défiler le document Web 20 dans le sens vertical et/ou horizontal. La barre d'outils 84 est déplaçable en cliquant à l'aide de la souris 42, sur une zone de la barre d'outils 84 (autres que les zones associées aux fonctions décrites ci-dessus), puis en effectuant une opération de glisser-déposer à l'aide de la souris vers l'endroit choisi. Ceci permet de pouvoir ajouter une annotation à n'importe quel endroit du document Web 20.

Dans le mode de réalisation considéré, l'application 21 d'annotation n'interagit qu'avec le module de gestion de rendu 60 pour générer ou restituer des annotations 23 sur les documents : elle ne traite que des données contenues dans les registres propres du module de gestion de rendu 60 et avec des fonctions propres du module de gestion de rendu 60, sans avoir recours à d'autres données ou fonctions de l'application de navigation 56 extérieures au module de gestion de rendu 60. L'application 21 d'annotation utilise ainsi les technologies HTML, CSS, Javascript. HTML et CSS sont utilisés pour implémenter le visuel de l'application d'annotation, et le Javascript est utilisé pour implémenter la communication avec le serveur de gestion d'annotation 18 ainsi que la logique de l'application, c'est à dire la manière dont l'application 21 réagit aux actions de l'utilisateur.

Dans un autre mode de réalisation, l'application 21 d'annotation a recours à d'autres données ou fonctions de l'application de navigation 56 extérieures au module de gestion de rendu 60, tout en étant exécutée dans le « contexte » de l'application de navigation 56.

Lorsqu'un utilisateur clique sur une zone prédéfinie à l'aide de sa souris 42, ou à l'aide d'un de ses doigts dans le cas d'un écran tactile, le clic de la souris ainsi que la position (x, y) sur l'écran de visualisation sont identifiés et interprétés par un logiciel de contrôle 100 de l'application d'annotations 21, par l'intermédiaire des fonctionnalités du module de gestion de rendu 60.

En fonction du type de l'annotation créée, l'application 21 d'annotation définit un point d'ancrage 120 associé à l'annotation 23. Par exemple, le point d'ancrage 120 d'une image est le centre de l'image sauf si cette image représente une flèche, auquel cas le point d'ancrage défini sera l'extrémité de la pointe de la flèche. En outre, le point d'ancrage d'un texte libre est défini comme étant le premier point du premier trait effectué par l'utilisateur via les moyens de saisie.

Pour chaque annotation, les coordonnées (X, Y) de son point d'ancrage sont déterminées relativement au coin supérieur gauche de la page.

Via l'exécution de la routine standard JavaScript DOM document.elementFromPoint(), l'application 21 extrait les valeurs de paramètres de l'élément 122 dit « source » (c'est-à-dire du noeud correspondant de la représentation DOM à partir de laquelle est générée la représentation source 80) de la représentation source 80 qui comprend le point de coordonnées (X, Y) auquel l'annotation 23 est alors associée.

Ces paramètres - qui comprennent entre autre le décalage en coordonnées entre le point d'ancrage 120 de l'annotation 23 et l'élément 122 - présentent des degrés d'importance distincts.

Les paramètres dits essentiels comprennent le type de l'élément (image, texte, etc.).

Les paramètres dits de haute importance comprennent une donnée ID d'identification, une donnée de source de l'élément 122 source -par exemple son URL- et le contenu textuel HTML de l'élément - lorsque l'élément 122 source est un paragraphe par exemple-.

Les paramètres dits de faible importance comprennent les coordonnées de l'élément source 122 relatives au coin supérieur gauche de la page.

Les valeurs de ces paramètres sont stockées, ainsi que des informations d'identification du document auquel l'annotation est rattachée. L'ensemble de ces informations définit les données d'annotation 22.

Les données d'annotation 22 générées par l'application d'annotation 21 lors de la création d'une annotation 23 sont alors communiquées au serveur de gestion d'annotation 18 qui les stocke.

Ces données d'annotation 22 sont ensuite nécessaires à l'application 21 d'annotation pour la restitution d'annotations 23 associées à un document visualisé sur un dispositif 12 selon l'invention.

A cet effet, l'application exécute la routine Javascript DOM document.getElementsByTagName() à partir de la valeur du type de l'élément source, qui retourne un tableau des éléments 124 candidats ayant pour type le type de l'élément source 122 auquel l'annotation 23 est associée. Ce tableau est alors stocké en mémoire.

A partir de ce tableau, un sous-tableau d'éléments candidats 124 est généré par l'application 21 à partir des éléments candidats 124 dont l'une au moins des valeurs des paramètres de haute importance est égale à celle du paramètre correspondant de l'élément source 122.

En pratique, la comparaison des propriétés des éléments est effectuée à partir d'un condensat (« hash ») des propriétés. Pour des raisons de coût de calcul, ce condensat ne comprend qu'une partie de la valeur de ces propriétés, par exemple les 32 caractères initiaux ou finaux de celles-ci.

Si un seul élément candidat 124 correspond, celui-ci est sélectionné comme élément d'ancrage 126 de l'annotation correspondante.

Si plus de deux éléments correspondent, les coordonnées des éléments candidats 124 sont comparées. Celui dont les coordonnées dans la représentation cible 82 sont les plus proches des coordonnées de l'élément source 122 dans la représentation source 80 est sélectionné.

Si aucun élément ne correspond, la comparaison précédente est réitérée à partir du tableau de tous les éléments candidats 124.

Si l'application 21 d'annotation n'identifie toujours pas d'élément d'ancrage 126, les coordonnées du point d'ancrage 120 de l'annotation 23 dans la représentation source 80 sont utilisées pour repositionner l'annotation 23 sur la représentation cible 82.

En pratique, une fois un élément d'ancrage 126 identifié, l'application 21 d'annotation obtient ses coordonnées et positionne l'annotation 23 relativement à cet élément d'ancrage 126 en faisant correspondre cette position relative avec la position de l'annotation 23 relativement à l'élément source 122.

L'application 21 modifie alors la représentation DOM générée par le module 60 de gestion de rendu qui réalise alors l'affichage de l'annotation 23 directement sur la représentation cible 82 du document qu'il génère sur les moyens de visualisation 34.

L'application 21 procède ainsi en ancrant une annotation 23 nouvellement créée à un élément du document considéré.

Dans le dispositif 12 selon l'invention, l'application 21 d'annotation ne nécessite pas d'être installée préalablement à son utilisation.

Lorsque l'utilisateur de l'application 21 d'annotation souhaite ajouter une annotation 23 à un document Web 20, il implémente l'application 21 via un marque-page scripté 74 de son application 56 de navigation. L'application 21 est alors téléchargée par le serveur de gestion d'annotation 18 sur le dispositif informatique 12 puis injectée dans le document.

Dans un mode de réalisation, le marque-page scripté 74 est généré automatiquement par le serveur de gestion d'annotation 18 lorsque l'utilisateur s'y enregistre pour pouvoir utiliser l'application 21. Le marque-page scripté 74 est inséré dans une page web présentée à l'utilisateur le serveur de gestion d'annotation 18 comme un URL ayant un attribut texte ou image invitant l'utilisateur à mémoriser cet URL comme marque-page.

Un tel procédé de déploiement de l'application 21 sur un dispositif électronique est adapté à tous les dispositifs dont la ou les applications de navigation 56 disposent d'un module de gestion de rendu 60.

De par les technologies standard - HTML, CSS, Javascript, etc. - que l'application 21 exploite pour fonctionner et du fait qu'elle est injectée dans le document web, elle ne requiert en outre aucune modification de l'application de navigation 56 pour fonctionner, et ne repose sur aucune technologie propriétaire d'une application de navigation 56 donnée.

L'application d'annotation 21 est donc adaptée pour permettre à l'utilisateur d'ajouter et de visualiser des annotations sur le document Web 20 via toutes les applications de navigation, notamment les applications de navigation implémentées sur les téléphones portables.

Par ailleurs, le stockage de l'application 21 sur le serveur de gestion d'annotation 18 facilite sa mise à jour, par exemple lors d'une modification du procédé d'annotation qu'elle implémente.

En effet, seule la mise à jour de l'application 21 se trouvant sur le serveur de gestion d'annotation 18 est alors nécessaire.

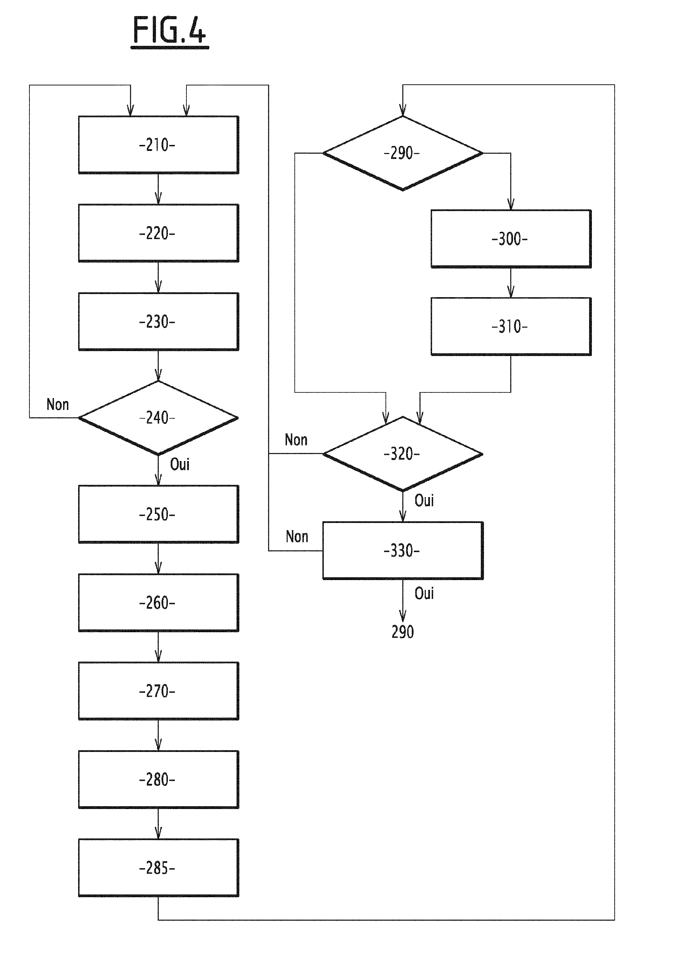

En référence à la figure 4, la mise en oeuvre des procédés d'archivage et de restitution dans un mode de mise en oeuvre de l'invention va maintenant être décrite de façon détaillée.

Lors d'une étape 210, l'utilisateur saisit dans la barre 68 de navigation l'adresse URL « URLdoc1 » (figure 2) d'un document Web 20 qu'il souhaite consulter grâce au clavier 32. L'application de navigation 56 commande à l'unité de traitement 38 l'exécution de l'application 54 de requête. L'application 54 de requête génère une requête émise via les moyens de communication 36 à destination du serveur Web 16 sur lequel est stocké le document.

A l'issue de cette étape 210, le serveur web 16 reçoit la requête émise par le dispositif informatique 12.

Lors d'une étape 220, le serveur Web 16 retourne le contenu du document Web 20.

A l'issue de cette étape 220, le dispositif informatique 12 reçoit le contenu du document par ses moyens de communication 36. Le document est alors transmis au module 60 de gestion de rendu de l'application 56 de navigation.

Lors d'une étape 230, le module 60 de gestion de rendu construit une représentation DOM source 80 du document ainsi transmis et réalise l'affichage de la représentation DOM 80 sur l'écran 44.

Lors d'une étape 240, l'utilisateur interagit avec le système de marque-pages 72 du navigateur. Celui-ci actionne le marque-page scripté « Annoter » 74.

Lors d'une étape 250, la requête associée au marque-page scripté 74 est envoyée par l'application 54 d'envoi de requête via les moyens 36 de communication à destination du serveur de gestion d'annotations 18.

A l'issue de cette étape 250, le serveur de gestion d'annotations 18 reçoit la requête qui lui est destinée.

Au cours d'une étape 260, le serveur de gestion d'annotation 18 déploie l'application d'annotation 21 sur le dispositif informatique 12, la réception précédente de la requête par le serveur de gestion d'annotation 18 ayant déclenché l'envoi de l'application d'annotation 21 à destination du dispositif informatique 12.

A l'issue de cette étape 260, l'application 21 reçue est installée dans la mémoire 52, puis exécutée, la barre d'outils 84 étant alors affichée par-dessus le document Web 20 à annoter et à l'intérieur du cadre d'affichage 69.

Lors d'une étape 270, l'utilisateur sélectionne le type de l'annotation 23 qu'il veut ajouter parmi plusieurs types à l'aide de la barre d'outils 84, afin de créer le document Web annoté. Ces types correspondent ainsi à un dessin à main levée effectué par l'utilisateur, à une image, telle une binette, encore appelé « smiley », ou une flèche, un champ de texte, du texte libre, etc.

Lors d'une étape 280, lorsque l'utilisateur a commandé, par l'intermédiaire du mode d'échange de la barre d'outils 84, la transmission à destination d'un autre utilisateur de l'adresse URL associée au document Web annoté, via les moyens de communication 36, le module d'archivage 62 transmet via les moyens de communication 36 les données d'annotation 22 générées à destination du serveur de gestion d'annotation 18 en vue de leur archivage.

Lors d'une étape 285, le serveur de gestion d'annotation 18 stocke alors les données d'annotation 22 en correspondance avec l'URL identifiant le document Web 20.

Le module d'échange 63 transmet via les moyens de communication 36 à destination de l'autre utilisateur l'adresse URL associée au document Web annoté. L'adresse URL associée au document Web annoté est transmise sous forme d'un lien hypertexte dans un courrier électronique ou dans un message sur un réseau social, tel que Facebook© ou Twitter©.

Lors d'une étape 290, l'autre utilisateur utilisant l'autre dispositif électronique 19 reçoit le lien hypertexte correspondant à l'adresse URL associée au document Web annoté, et le sélectionne. La sélection du lien hypertexte lance l'exécution de l'application de navigation 56, si celle-ci n'était pas précédemment exécutée, et commande via l'application de navigation 56 à l'unité de traitement 38 l'exécution de l'application de requête 54. L'application de requête 54 génère alors une requête émise via les moyens de communication 36 à destination du serveur de gestion d'annotation 18, cette requête comprenant l'adresse URL associée au document Web annoté.

Le serveur de gestion d'annotation 18, après avoir reçu la requête comprenant l'adresse URL associée au document Web annoté, transmet au dispositif électronique 19 les données d'annotation 22 associées au document qui ont été préalablement stockées lors de l'étape 285.

L'unité centrale 38 du dispositif de restitution traite les données d'annotation 22 reçues et l'application d'annotation 21 détermine si des annotations 23 associées au document sont à restituer sur une nouvelle représentation DOM cible 82 du document en fonction des données d'annotation 22 reçues.

Lors d'une étape 300, l'application 21 d'annotation du dispositif de restitution identifie chacun des éléments d'ancrage 126 de la représentation cible 82 auxquels sont associées des annotations 23, comme décrit ci-dessus. Cette identification est réalisée par le biais de fonctions JavaScript standard telles que document.elementFromPoint() et par les attributs standards des éléments HTML tels que HTMLElementObject.tagName, HTMLElementObject.innerHTML, HTMLElementObject.id, imageObject.src, où HTMLElementObject représente un élément d'ancrage et imageObject un élément d'ancrage qui est une image.

Lors d'une étape 310, l'application d'annotation 21 du dispositif de restitution restitue les annotations 23 via le module 60 de gestion de rendu de l'application 56 de navigation sur la représentation cible 82 générée par le module 60 à partir de la représentation DOM source 80. Cette restitution est réalisée par le biais de fonctions JavaScript standard telles que document.getElementsByTagName() et par les attributs standards des éléments HTML tels que HTMLElementObject.innerHTML, HTMLElementObject.id, imageObject.src, où HTMLElementObject représente un élément d'ancrage et imageObject un élément d'ancrage qui est une image.

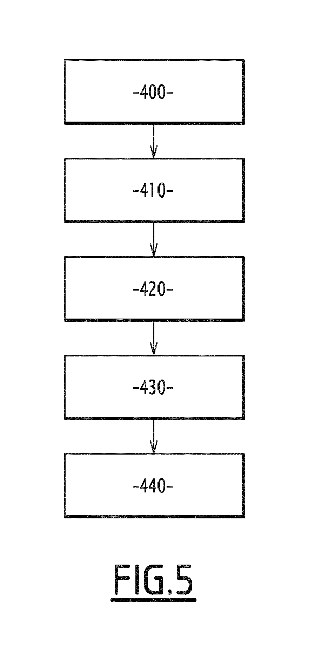

Lors de la restitution de la représentation du document Web annoté 24, un élément Web sélectionnable, tel qu'un lien hypertexte, est propre à sélectionner bien qu'il soit entouré ou surchargé d'une annotation, telle qu'un dessin à la main, comme cela se décrit plus en détail à l'aide de la figure 5 représentant un organigramme du procédé selon l'invention.

Lors d'une étape 320, l'utilisateur peut ou non procéder à la création d'une annotation 23. Si tel est le cas, l'utilisateur définit via l'application 21 la ou les annotations 23 qu'il ajoute à la représentation cible 82 du document comme décrit ci-dessus.

Les données d'annotation 22 générées par la création d'une ou plusieurs annotation(s) 23 sont stockées en mémoire 52.

A l'issue de l'étape 320, les annotations 23 sont affichées sur une nouvelle représentation cible 82 générée par le module 60 de gestion de rendu.

Au cours d'une étape 330, le module d'archivage 62 de l'application d'annotation 21 transmet via les moyens 36 de communication les données d'annotation 22 générées lors de l'étape 320 à destination du serveur de gestion d'annotation 18. Celui-ci les stocke ensuite en correspondance avec l'URL identifiant le document.

A l'issue de l'étape 330, en cas d'échange avec un autre utilisateur des annotations créées à l'étape 320 et archivées à l'étape 330, le procédé retourne à l'étape 290. Dans le cas contraire, le procédé retourne à l'étape 210.

En référence à la figure 5, la mise en oeuvre du procédé selon l'invention va maintenant être décrite de façon détaillée.

Lors de l'étape 400, un événement tactile ou de souris associé à l'élément Web supérieur est détecté. La détection de l'évènement comporte, par exemple, le déclenchement de la capture d'événement(s) tactile ou de souris associé(s) à l'élément Web supérieur.

Suite à la détection dudit évènement, l'élément Web supérieur est masqué lors de l'étape 410. L'étape de masquage comporte, par exemple, le positionnement à l'état caché d'un attribut CSS de visibilité correspondant à l'élément Web supérieur.

L'élément Web cible 25C correspondant à l'élément Web inférieur situé directement sous l'événement détecté est alors déterminé à l'étape 420, par exemple via l'exécution la routine standard JavaScript DOM document.elementFromPoint().

En complément, l'élément Web supérieur précédemment masqué est à nouveau affiché lors de l'étape 430, par exemple, via le positionnement à l'état visible de l'attribut CSS de visibilité correspondant à l'élément Web supérieur.

La durée d'un cycle comportant les étapes 400 à 430 est très brève et inférieure à 10 ms. L'utilisateur voit alors en permanence l'annotation associée à l'élément Web supérieur 25A, de par la persistance rétinienne, bien que l'élément Web supérieur 25A soit temporairement masqué lors de l'étape 410.

Lors de l'étape 440, l'événement est envoyé à l'élément Web cible 25C déterminé précédemment, afin d'exécuter le traitement associé à l'élément Web cible 25C, tel que par exemple l'envoi d'une requête au serveur Web 16 en vue de l'affichage d'un nouveau document Web 20 lorsque l'élément Web cible 25C est un lien hypertexte.

Dans l'exemple de réalisation de la figure 5, l'étape d'envoi de l'événement comporte la création d'une réplique de l'événement, par exemple via l'exécution la routine standard JavaScript DOM document.createEvent(), puis l'envoi de la réplique crée à l'élément Web cible, par exemple via l'exécution la routine standard JavaScript DOM element.dispatchEvent().

En variante, l'affichage de l'élément Web supérieur 25A précédemment masqué est effectué après l'étape 440 d'envoi de l'évènement à l'élément Web cible 25C. Le cas échéant, la durée écoulée depuis l'étape 400 jusqu'à l'affichage de l'élément Web supérieur 25A précédemment masqué est également très brève et inférieure à 10 ms.

Les étapes 400 à 440 sont incluses dans l'étape 310 d'affichage de la représentation du document Web annoté 24.

Ainsi, le procédé selon l'invention permet, lors de la restitution de la représentation du document Web annoté 24, de sélectionner à l'aide d'un clic de souris ou d'un toucher tactile un élément Web sélectionnable, tel qu'un lien hypertexte, bien qu'il soit entouré ou surchargé d'une annotation, telle qu'un dessin à la main. Avec le procédé de l'état de la technique, le lien hypertexte, bien qu'il soit visible par transparence par l'utilisateur, ne peut pas être sélectionné, car il est en permanence masqué par l'élément Web supérieur 25A.

Le lien hypertexte est affiché en surbrillance, comme représenté sur la figure 3, afin d'indiquer que le lien est sélectionnable.

On conçoit ainsi que le procédé de restitution, via la mise en oeuvre du dispositif électronique associé, permet de sélectionner un élément Web cible, tel qu'un lien hypertexte, autour duquel une annotation a été ajoutée, afin de faciliter l'utilisation du dispositif électronique.

## Revendications

1. Procédé de restitution d'une représentation d'un document Web annoté (24), le document Web annoté (24) étant un document Web (20) sur lequel au moins une annotation (23) a été ajoutée, le document Web annoté (24) comprenant un élément Web supérieur (25A) comportant au moins une annotation (23) et au moins un élément Web inférieur (25B, 25C) disposé au-dessous de l'élément Web supérieur (25A), le procédé étant mis en oeuvre par un dispositif électronique (12, 19) comprenant des moyens de visualisation (34), une application (56) de navigation sur le réseau Internet et une application d'annotation (21),
le procédé comportant l'étape suivante :
- l'affichage (310) du document Web annoté (24) comportant la ou chaque annotation ajoutée (23),
**caractérisé en ce que** l'étape d'affichage comporte :
- (i) la détection (400) d'un événement tactile ou de souris associé à l'élément Web supérieur (25A),
- (ii) le masquage (410) de l'élément Web supérieur (25A) suite à la détection dudit évènement,
- (iii) la détermination (420) d'un élément Web cible (25C) correspondant à l'élément Web inférieur situé directement sous ledit événement, et
- (iv) l'envoi (440) de l'événement à l'élément Web cible (25C).

2. Procédé selon la revendication 1, dans lequel la détection de l'évènement (410) comporte le déclenchement de la capture d'événement(s) tactile ou de souris associé(s) à l'élément Web supérieur (25A).

3. Procédé selon la revendication 1 ou 2, dans lequel l'envoi de l'événement (440) comporte la création d'une réplique de l'événement, puis l'envoi de la réplique crée à l'élément Web cible.

4. Procédé selon l'une quelconque des revendications précédentes, dans lequel l'étape d'affichage comporte en outre après l'étape (iii) :
- l'affichage (430) de l'élément Web supérieur (25A) précédemment masqué.

5. Procédé selon l'une quelconque des revendications précédentes, dans lequel le masquage de l'élément Web supérieur (420) comporte le positionnement à l'état caché d'un attribut CSS de visibilité correspondant à l'élément Web supérieur (25A).

6. Procédé selon les revendications 4 et 5 prises ensemble, dans lequel l'affichage de l'élément Web supérieur précédemment masqué (430) comporte le positionnement à l'état visible de l'attribut CSS de visibilité correspondant à l'élément Web supérieur (25A).

7. Procédé selon l'une quelconque des revendications précédentes, dans lequel le document Web (20) est un document HTML, et l'élément Web (25A, 25B, 25C) est un élément HTML.

8. Procédé de restitution selon la revendication 7, dans lequel l'élément Web supérieur (25A) est un élément HTML propre à effectuer un rendu dynamique d'une image à l'aide d'un script.

9. Produit programme d'ordinateur comportant les instructions logicielles qui, lorsqu'elles sont mises en oeuvre par une unité de traitement (38) intégrée à un dispositif électronique (12, 19) comportant des moyens (34) de visualisation de données et une application (56) de navigation sur le réseau Internet, met en oeuvre les étapes, incombant à l'application d'annotation (21), du procédé selon l'une quelconque des revendications précédentes, relativement à un document Web (20).

10. Dispositif électronique (12, 19) comprenant :
- une unité de traitement (38),
- des moyens (34) de visualisation de données,
- une application (56) de navigation sur le réseau Internet,
- une application (21) d'annotation propre à restituer et/ou ajouter au moins une annotation (23) sur un document Web (20), l'application d'annotation (21) comportant un module (64) de lecture de la ou des annotations propre à restituer une représentation d'un document Web annoté (24), le document Web annoté (24) étant le document Web (20) sur lequel au moins une annotation (23) a été ajoutée, le document Web annoté (24) comprenant un élément Web supérieur (25A) comportant au moins une annotation (23) et au moins un élément Web inférieur (25B, 25C) disposé au-dessous de l'élément Web supérieur (25A),
**caractérisé en ce que** le module de lecture (64) comprend des moyens (65A) de détection d'un événement tactile ou de souris associé à l'élément Web supérieur (25A), des moyens (65B) de masquage de l'élément Web supérieur (25A) suite à la détection dudit évènement, des moyens (65C) de détermination d'un élément Web cible (25C) correspondant à l'élément Web inférieur situé directement sous ledit événement, et des moyens (65D) d'envoi de l'événement à l'élément Web cible (25C).

11. Dispositif (12, 19) selon la revendication 10, dans lequel le dispositif comporte des moyens d'injection dans le document de ladite application d'annotation (21) pour étendre le document, et l'application de navigation (56) comprend un module (58) de gestion de l'interface graphique d'accès au réseau Internet (14) et un module (60) de gestion de rendu de document définissant un contexte d'exécution du module de gestion de rendu (60), lequel contexte comprend les données source et traitées du module de gestion de rendu (60),
dans lequel l'application d'annotation (21) est propre à être exécutée depuis le document étendu seulement dans le contexte d'exécution du module de gestion de rendu (60) sur les données source et traitées du module de gestion de rendu (60) et en utilisant les mêmes fonctions que le module de gestion de rendu (60), et
dans lequel le document traité par l'application de navigation (56) comprend des éléments graphiques, l'application d'annotation (21) étant adaptée pour ancrer une annotation (23) à un point d'un élément graphique du document indépendamment des coordonnées de l'élément graphique dans le document.
